(19) Europäisches Patentamt
European Patent Office
Office européen des brevets

(11) Veröffentlichungsnummer: **0 043 439**
**B1**

(12) # EUROPÄISCHE PATENTSCHRIFT

(45) Veröffentlichungstag der Patentschrift: **20.07.83**

(51) Int. Cl.³: **C 09 B 43/10** // D06P3/32, D21H1/46

(21) Anmeldenummer: **81104163.1**

(22) Anmeldetag: **01.06.81**

(54) **Trisazo/azoxyfarbstoffgemische, Verfahren zu ihrer Herstellung sowie ihre Verwendung.**

(30) Priorität: **12.06.80 DE 3021979**

(43) Veröffentlichungstag der Anmeldung: **13.01.82 Patentblatt 82/2**

(45) Bekanntmachung des Hinweises auf die Patenterteilung: **20.07.83 Patentblatt 83/29**

(84) Benannte Vertragsstaaten: **CH DE FR GB IT LI**

(56) Entgegenhaltungen:
**DE-A-2 622 517**
**FR-A-936 233**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Herd, Karl Josef, Dr., Buchholzstrasse 32, D-5000 Koeln 80 (DE)**
Erfinder: **Nickel, Horst, Dr., Fontanestrasse 23, D-5090 Leverkusen 1 (DE)**

**EP 0 043 439 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Trisazo/azoxyfarbstoffgemische, Verfahren zu ihrer Herstellung sowie ihre Verwendung

Die Erfindung betrifft Trisazo/azoxyfarbstoffgemische, welche sich in Form der freien Säure durch die Formel

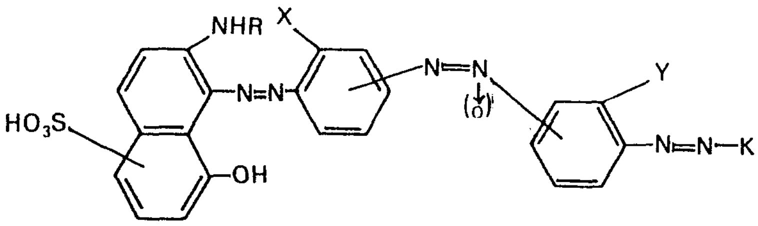

(I)

wiedergeben lassen, in der
R Wasserstoff oder gegebenenfalls substituiertes Alykl,
X,Y Wasserstoff, Alkyl, Alkoxy, Halogen, Hydroxy, Alkylsulfonyl, gegebenenfalls mono- oder dialkylsubstituiertes Sulfamoyl, Carboxy und Carboxyalkoxy und
K den Rest einer Kupplungskomponente bezeichnen.

K steht beispielsweise für eine Kupplungskomponente aus der Hydroxybenzolsulfonsäure-, Hydroxybenzolcarbonsäure-, Pyrazol-, Indol- insbesondere aber Naphtholsulfonsäure-Reihe.

Von besonderer Bedeutung sind Trisazo/azoxyfarbstoffgemische, welche in Form der freien Säure der Formel

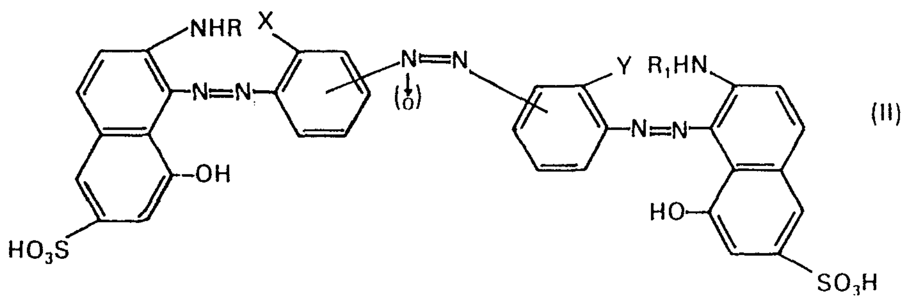

(II)

entsprechen, in der
R, X und Y die oben angegebene Bedeutung haben und $R_1$ für Wasserstoff oder gegebenenfalls substituiertes Alkyl stehen.

Weiterhin bevorzugt sind Trisazo/azoxyfarbstoffgemische der Formeln (III), (IV) oder (V), in denen R, $R_1$, X und Y die bereits genannten Bedeutungen haben.

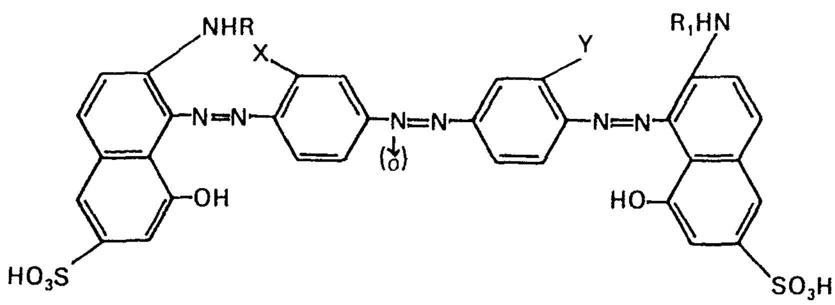

(III)

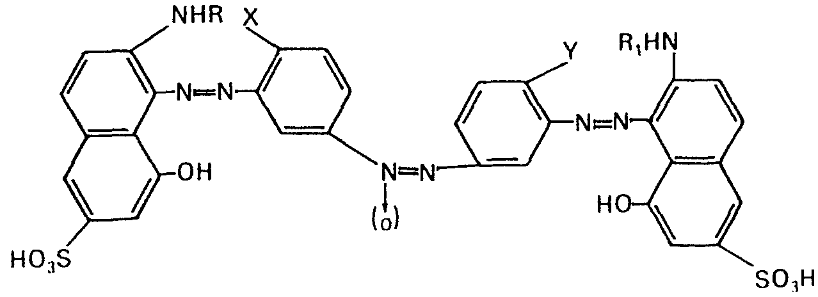

(IV)

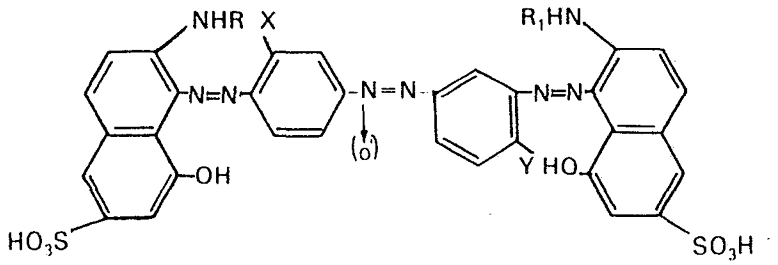

(V)

Von besonderer Bedeutung sind weiterhin Trisazo/azoxyfarbstoffgemische, die in Form der freien Säure der Formel

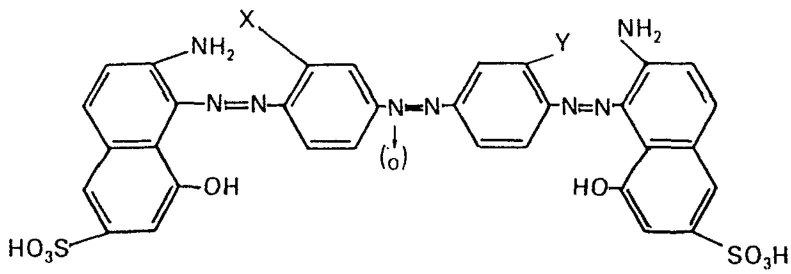

(VI)

entsprechen, in der X und Y die oben angegebenen Bedeutungen besitzen.

R, $R_1$ stehen vorzugsweise für Wasserstoff oder $C_1$-$C_4$-Alkyl, das beispielsweise durch -OH, -COOH oder -$SO_3H$ substituiert sein kann. Beispielsweise seien genannt: Methyl, Ethyl, Carboxymethyl, 2-Hydroxyethyl, Sulfoethyl.
X, Y stehen vorzugsweise für Wasserstoff, $C_1$-$C_4$-Alkyl, insbesondere Methyl und Ethyl, $C_1$-$C_4$-Alkoxy, Chlor, Brom, Hydroxy, $C_1$-$C_4$-Alkylsulfonyl insbesondere Methylsulfonyl gegebenenfalls mono- oder di-$C_1$-$C_4$-alkylsubstituiertes Sulfamoyl, COOH, -O[$C_1$-$C_4$-Alkyl]COOH.

In den erfindungsgemässen Trisazo/azoxyfarbstoffgemischen können die Farbstoffe in Form der freien Säure oder deren Salze, insbesondere der Alkali- und Ammoniumsalze vorliegen.

Die Herstellung der Farbstoffe der Formeln (I) bis (VI) erfolgt in der Weise, dass man nitrogruppenhaltige Monoazoverbindungen bzw. -mischungen der Formel (VII) oder der Formel (VIII) sowie Mischungen der Monoazoverbindungen der Formeln (VII) und (VIII), oder (VII) und (IX) bzw. (VIII) und (IX),

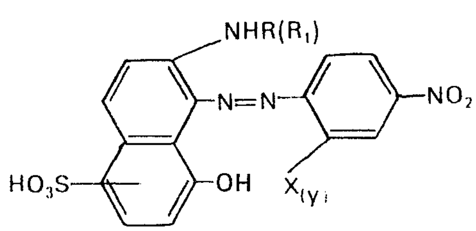

(VII)

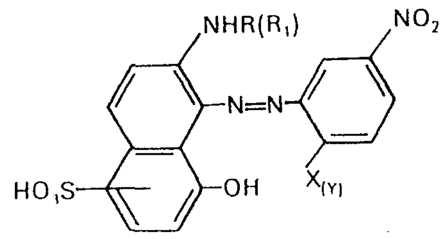

(VIII)

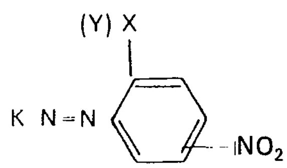

(IX)

worin R, $R_1$, X und Y sowie K die bereits angegebene Bedeutung besitzen, in wässrigem alkalischen Medium bei Temperaturen zwischen 30–90°C mit einem Reduktionsmittel, wie z.B. Glucose, Hydrazin/Katalysator, Hydrazin/Aktivkohle, Natriumsulfitlösung, Natriumsulfid usw., reduziert und gleichzeitig zu Trisazo- bzw. azoxyverbindungen kondensiert (siehe Houben-Weyl Bd. 10/3, S. 346–354).

In einer bevorzugten Ausführungsform werden nach erfolgter Reduktion mögliche Nebenkomponenten mit einem der üblichen Oxidationsmittel, z.B. Chlorlauge oder Wasserstoffperoxid gegebenenfalls in Gegenwart von Metallen zusätzlich zu den Trisazo/azoxyfarbstoffen der Formel (I) aufoxidiert. Diese nachgeschaltete Oxidation führt in der Regel dann zu einem relativ einheitlichen Farbstoff.

Die Wahl der optimalen Oxidationsbedingungen wie auch die Menge an Oxidationsmittel wird auf die Art und Qualität des entstandenen Rohfarbstoffs abgestimmt und ist durch einfache Vorversuche zu ermitteln (vgl. auch Beispiel 1).

Als Oxidationsmittel kommen alle die in Houben-Weyl, Bd. 10/3, S. 371 ff genannten Reagentien in Betracht, vorzugsweise allerdings halogen- und sauerstoffhaltige Oxidationsmittel wie z.B.

Halogene
Hypochlorite
Persulfate, Perborate, Permanganate
Chromsäure
Wasserstoffperoxid
Eisessig/Wasserstoffperoxid
Eisessig/Wasserstoffperoxid/Borsäure.

Als besonders geeignet erweist sich die Verwendung von Chlor, Chlorlauge oder Wasserstoffperoxid unter alkalisch wässrigen Bedingungen, vorzugsweise bei pH-Werten von etwa 9 bis etwa 12.

Vorzugsweise oxidiert man bei Temperaturen von etwa 30°C bis etwa 80°C.

Die Nitroazoverbindungen der Formel (VII), (VIII) bzw. (IX) werden hergestellt, indem man diazotierte 3- bzw.-4-Nitroaminobenzole der Formel (X) mit gegebenenfalls N-substituierten Amino-naphtholsulfonsäuren der Formel (XI) unter sauren Bedingungen in ortho-Stellung zur Aminogruppe oder aber mit Kupplungskomponenten KH kuppelt.

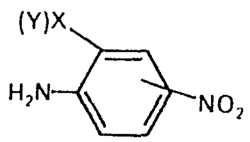

(X)

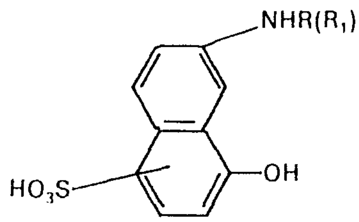

(XI)

X, Y, R, $R_1$ und K besitzen die bereits genannten Bedeutungen.

Geeignete Verbindungen der Formel (X) sind beispielsweise:

3-Nitroanilin
4-Nitroanilin
2-Methyl-5-nitroanilin
2-Methyl-4-nitroanilin
2-Methoxy-5-nitroanilin
2-Methoxy-4-nitroanilin
2-Ethoxy-5-nitroanilin
2-Ethoxy-4-nitroanilin
2-Chlor-5-nitroanilin
2-Chlor-4-nitroanilin
2-Brom-4-nitroanilin
2-Hydroxy-4-nitroanilin
2-Methansulfonyl-5-nitroanilin
2-Methansulfonyl-4-nitroanilin
2-(N-Ethyl-N-phenyl)sulfonamido-5-nitroanilin
2-(N-Ethyl-N-phenyl)sulfonamido-4-nitroanilin
2-Amino-4-nitro-benzolsulfonsäure
2-Amino-4-nitro-benzoesäure
2-Amino-5-nitro-benzoesäure
(2'-Amino-5'-nitrophenyl)essigsäure
(2'-Amino-5'-nitro)phenoxyessigsäure

Geeignete Verbindungen der Formel (XI) sind beispielsweise:

7-Amino-1-hydroxy-3-naphthalinsulfonsäure
7-Amino-1-hydroxy-4-naphthalinsulfonsäure
7-N-Methylamino-1-hydroxy-3-naphthalinsulfonsäure
7-N-Ethylamino-1-hydroxy-3-naphthalinsulfonsäure
7-N-Propylamino-1-hydroxy-3-naphthalinsulfonsäure
7-N-Butylamino-1-hydroxy-3-naphthalinsulfonsäure
7-N(2'-Hydroxyethyl)amino-1-hydroxy-3-naphthalinsulfonsäure
7-N(2'-Sulfoethyl)amino-1-hydroxy-3-naphthalinsulfonsäure
7-N(2'-Carboxymethyl)amino-1-hydroxy-3-naphthalinsulfonsäure
7-N(2'-Carboxyethyl)amino-1-hydroxy-3-naphthalinsulfonsäure

Ausgewählte Beispiele für Kupplungskomponente K-H sind:

5-Amino-1-hydroxy-2-naphthalinsulfonsäure
6-Amino-1-hydroxy-2-naphthalinsulfonsäure
5-Amino-1-hydroxy-3-naphthalinsulfonsäure
6-Amino-1-hydroxy-3-naphthalinsulfonsäure
4-Hydroxy-7-(methylamino)-2-naphthalinsulfonsäure
7-(Diethylamino)-4-hydroxy-2-naphthalinsulfonsäure
4-Hydroxy-7-(phenylamino)-2-naphthalinsulfonsäure
7-(Acetylamino)-4-hydroxy-2-naphthalinsulfonsäure
8-Amino-1-hydroxy-3-naphthalinsulfonsäure
4-Amino-5-hydroxy-1-naphthalin-sulfonsäure
4-Amino-5-hydroxy-1,6-naphthalinsulfonsäure
2-Amino-5-hydroxy-1,7-naphthalindisulfonsäure
4-Amino-5-hydroxy-1,7-naphthalindisulfonsäure
4-Amino-5-hydroxy-2,7-naphthalindisulfonsäure
4-(Ethylamino)-5-hydroxy-2,7-naphthalindisulfonsäure

7-Amino-3-hydroxy-1-naphthalinsulfonsäure
4-Amino-6-hydroxy-2-naphthalinsulfonsäure
6-Amino-7-hydroxy-2-naphthalinsulfonsäure
5-Amino-7-hydroxy-2-naphthalinsulfonsäure
4-Amino-7-hydroxy-2-naphthalinsulfonsäure
6-Amino-2-hydroxy-1,4-naphthalindisulfonsäure
8-Amino-3-hydroxy-1,6-naphthalindisulfonsäure
8-Amino-3-hydroxy-1,5-naphthalindisulfonsäure
7-Amino-6-hydroxy-1,3-naphthalindisulfonsäure
1-Hydroxy-2-naphthalinsulfonsäure
4-Hydroxy-2-naphthalinsulfonsäure
4-Hydroxy-1-naphthalinsulfonsäure
5-Hydroxy-1-naphthalinsulfonsäure
4-Hydroxy-2,7-naphthalindisulfonsäure
4-Hydroxy-2,6-naphthalindisulfonsäure
8-Hydroxy-1,6-naphthalindisulfonsäure
3-Hydroxy-1-naphthalinsulfonsäure
6-Hydroxy-2-naphthalinsulfonsäure
7-Hydroxy-2-naphthalinsulfonsäure
3-Hydroxy-2,7-naphthalindisulfonsäure
3-Hydroxy-2,6-naphthalindisulfonsäure
7-Hydroxy-1,3-naphthalindisulfonsäure
4,5-Dihydroxy-2,7-naphthalindisulfonsäure
2-Hydroxybenzoesäure
3-Hydroxybenzoesäure
4-Hydroxybenzoesäure
5-Chlor-2-hydroxybenzoesäure
2-Hydroxy-4-methylbenzoesäure
2,4-Dihydroxybenzoesäure
4-Hydroxy-1,3-benzoldicarbonsäure
2-Hydroxy-benzolsulfonsäure
3-Hydroxy-benzolsulfonsäure
4-Hydroxy-benzolsulfonsäure usw.

Verwendung finden die Farbstoffe der Formeln (I) bis (VI) zum Färben von hydroxylgruppenhaltigen und amidgruppenhaltigen Fasermaterialien wie Baumwolle, Seide, natürlichem und synthetischem Polyamid sowie Papier und Leder.

So färben z.B. Farbstoffe gemäss Formel (III), (V) und (VI) Polyamidmaterialien oder Baumwolle in violetten, marineblauen, grünstichig blauen sowie schwarzen Tönen von guten bis sehr guten Echtheiten. (Einzelheiten sind den Tabellen und Beispielen zu entnehmen).

Vorwiegend rote und braune Färbungen auf Textilmaterialien erhält man beim Einsatz von Farbstoffen der Formel (IV).

Die Farbstoffe weisen ausserdem ein gutes Aufbauvermögen und gute Kombinierbarkeit auf. Sie können in Mischung mit anderen Farbstoffen, z.B. für Schwarzmischungen eingesetzt werden.

In der deutschen Patentschrift 2622517 werden ähnliche Farbstoffe beschrieben, die sich von den erfindungsgemässen Farbstoffen dadurch unterscheiden, dass sie keine Azoxygruppe und zwingend eine Sulfogruppe in einem der mittelständigen Arylkerne aufweisen.

Beispiel 1

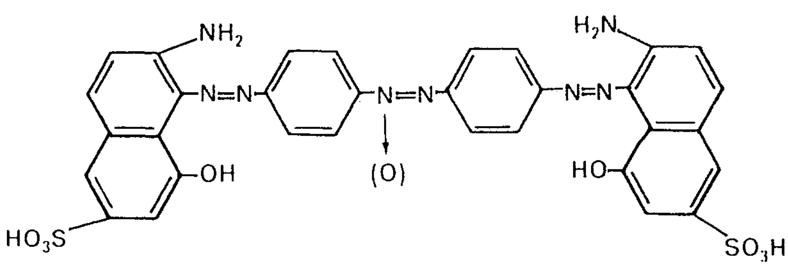

336 g p-Nitroanilin werden mit 780 ml Salzsäure und 160 g Natriumnitrit bei 8–14°C in wässriger Lösung (Vol. ca. 10 l) diazotiert. Der Nitritüberschuss wird mit Amidosulfonsäure zerstört, und die Mischung geklärt. Dazu tropft man bei 10°C innerhalb von 1 h eine Lösung aus 552 g 7-Amino-1-hydroxy-3-naphthalinsulfonsäure in 750 ml Wasser und 1,5 l 20 Proz. Sodalösung. Es wird 2 h gerührt und die Kupplungsmischung mit 900 ml Sodalösung abgestumpft. Man heizt auf 65°C auf, stellt die Reaktionsmischung mit 900 ml konzentrierter Natronlauge auf pH 12,5 und fügt 300 g Traubenzucker zu. Die Reduktion verläuft schwach exotherm, was sich im Temperaturanstieg auf 68°C anzeigt. Die Reaktionsmischung wird weitere 30 Minuten bei 65–70°C gehalten (pH: ca. 11,5). Es wird mit 540 g Kochsalz ausgesalzen. Zur Oxidation des roten Nebenprodukts versetzt man die Mischung bei 65°C zügig mit 1,3 l Chlorlauge (ca. 13% aktives Chlor) und rührt 30 Minuten nach. Durch Zugabe von 450 ml Salzsäure stellt man die Mischung neutral, rührt nach Zusatz von etwa 360 g Kochsalz eine weitere Stunde und saugt bei 60°C ab. Nach dem Isolieren und Trocknen erhält man ca. 850 g Farbstoff, der synthetisches Polyamid (Polyamid 6) in marineblauem Ton mit sehr guten Allgemeinechtheiten färbt. ($\lambda_{max}$ = 573 nm).

(Alle $\lambda_{max}$-Werte beziehen sich auf Wasser als Lösungsmittel).

Analog zu der im Beispiel 1 beschriebenen Arbeitsweise werden auch die in den folgenden Tabellen gekennzeichneten Farbstoffe hergestellt. (PA=Synthetisches Polyamid, BW=Baumwolle).

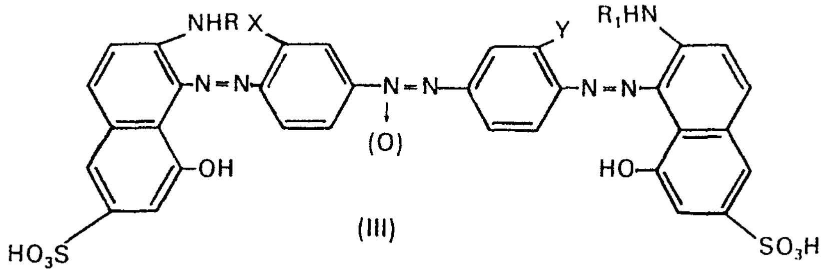

(III)

Tabelle 1:

| Nr. | R | $R_1$ | X | Y | Farbton (gefärbtes Material) | [nm] λ max |
|---|---|---|---|---|---|---|
| 2 | H | H | $CH_3$ | $CH_3$ | marineblau (PA) | 573 |
| 3 | H | H | Cl | Cl | marineblau (PA) | 595 |
| 4 | H | H | Br | Br | marineblau (PA) | 598 |
| 5 | H | H | $OCH_3$ | $OCH_3$ | grünstichig blau (PA) | 617 |
| 6 | H | H | $SO_2CH_3$ | $SO_2CH_3$ | blau (PA) | 608 |
| 7 | H | H | $SO_2-N(C_2H_5)-C_6H_5$ | $SO_2-N(C_2H_5)-C_6H_5$ | grünst. blau (PA) | 623 |
| 8 | $CH_3$ | $CH_3$ | H | H | blau (PA) | 588 |
| 9 | $CH_2CH_2OH$ | $CH_2CH_2OH$ | H | H | blau (PA) | 591 |
| 10 | $CH_2CO_2H$ | $CH_2COH_2$ | H | H | blau (PA) (Bw) | |
| 11 | $CH_2CH_2SO_3H$ | $CH_2CH_2SO_3H$ | H | H | blau (Bw) | 591 |
| 12 | $CH_3$ | $CH_3$ | Cl | Cl | marineblau (PA) | |
| 13 | H | H | $CO_2H$ | $CO_2H$ | blau (Bw) | |
| 14 | H | H | $OCH_2-CO_2H$ | $OCH_2-CO_2H$ | grünst. blau (Bw) | |
| 15 | $CH_2CH_2SO_3H$ | $CH_2CH_2SO_3H$ | $OCH_3$ | $OCH_3$ | grünst. blau (Bw) (Papier) | |
| 16 | $CH_2CO_2H$ | $CH_2CO_2H$ | $OCH_3$ | $OCH_3$ | grünst. blau (BW) | |
| 17 | $CH_3$ | H | H | H | marineblau (PA) | |
| 18 | $CH_3$ | H | $CH_3$ | H | marineblau (PA) | |
| 19 | $CH_3$ | $CH_3$ | $OCH_3$ | $OCH_3$ | blau (PA) | |
| 20 | $CH_3$ | $CH_3$ | $SO_2N(C_2H_5)(C_6H_5)$ | $SO_2N(C_2H_5)(C_6H_5)$ | grünst. blau(PA) | |
| 21 | $C_2H_5$ | $C_2H_5$ | H | H | marineblau (PA) | |
| 22 | $C_2H_5$ | $C_2H_5$ | Cl | Cl | marineblau(PA) | |
| 23 | $C_2H_5$ | $C_2H_5$ | $CO_2H$ | $CO_2H$ | blau (BW) (PA) | |

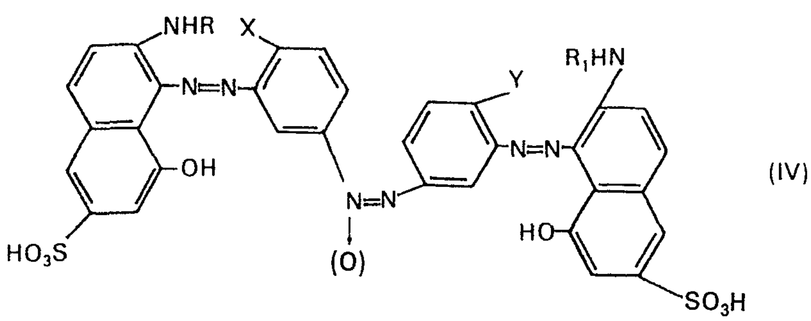

(IV)

Tabelle 2

| Nr. | R | $R_1$ | X | Y | Farbton (gefärbtes Material) | [nm] λ max |
|---|---|---|---|---|---|---|
| 24 | H | H | H | H | rot (PA) | 500 |
| 25 | H | H | $CH_3$ | $CH_3$ | blaustichig rot (PA) | 504 |
| 26 | $CH_3$ | $CH_3$ | H | H | rot (PA) | |
| 27 | $CH_3$ | $CH_3$ | $CH_3$ | $CH_3$ | blaustichig rot (PA) | |
| 28 | $CH_2CH_2OH$ | $CH_2CH_2OH$ | H | H | blaustichig rot (PA) | |
| 29 | $CH_2CH_2OH$ | $CH_2CH_2OH$ | $CH_3$ | $CH_3$ | blaustichig rot (PA) | |
| 30 | $CH_2CO_2H$ | $CH_2CO_2H$ | H | H | blaustichig rot (PA) (BW) | |

Tabelle 2 (Fortsetzung)

| Nr. | R | $R_1$ | X | Y | Farbton (gefärbtes Material) | [nm] | λ max |
|---|---|---|---|---|---|---|---|
| 31 | $CH_2CO_2H$ | $CH_2CO_2H$ | $CH_3$ | $CH_3$ | blaustichig rot (PA) (BW) | | |
| 32 | $CH_2CH_2SO_3H$ | $CH_2CH_2SO_3H$ | H | H | blaustichig rot (BW)) | | |
| 33 | $CH_2CH_2SO_3H$ | $CH_2CH_2SO_3H$ | $CH_3$ | $CH_3$ | blaustichig rot (BW) | | |

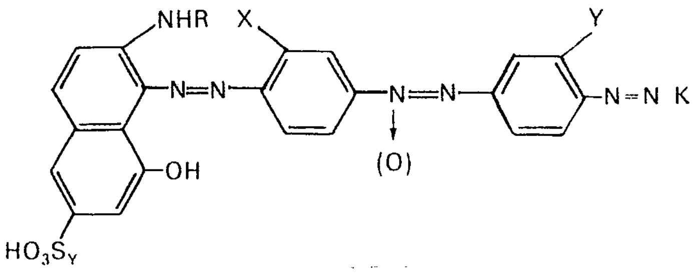

Tabelle 3

| Nr. | R | X | Y | K | Farbton/ $\lambda_{max}$[nm] |
|---|---|---|---|---|---|
| 34 | H | H | H | 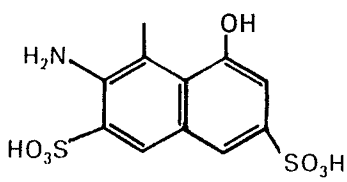 | blau (PA/BW)/582 |
| 35 | H | H | H | 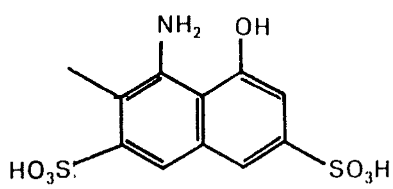 | marineblau (PA/BW)/587 |
| 36 | H | H | H | 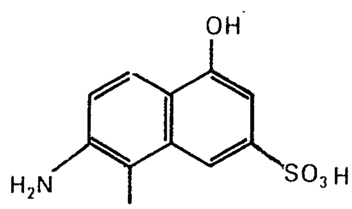 | violett (PA)/560 |
| 37 | H | H | H | 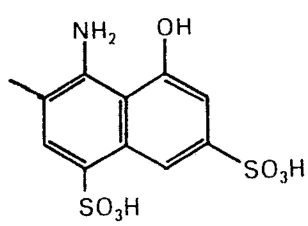 | grünstichig blau (PA) blau (BW) 588 |
| 38 | H | H | H | 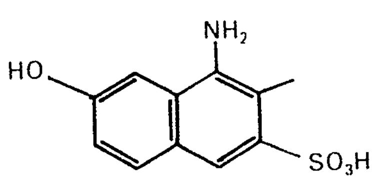 | graublau (PA)/572 |
| 39 | H | H | H | 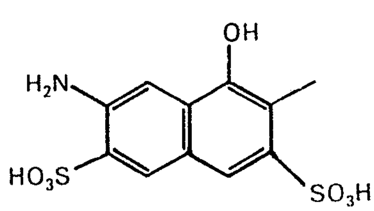 | blauschwarz (PA) violett (BW)/578 |

Tabelle 3 (Fortsetzung)

| Nr. | R | X | Y | K | Farbton/ $\lambda_{max}$[nm] |
|---|---|---|---|---|---|
| 40 | H | H | H | 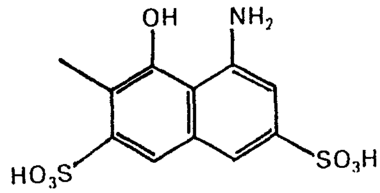 | blau (PA)<br>rotst. blau (BE)/578 |
| 41 | H | H | H | 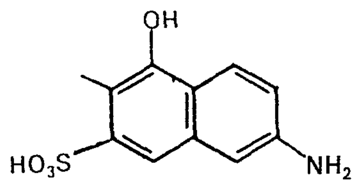 | violett (BW/PA)/561 |
| 42 | H | H | H | 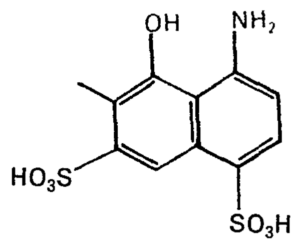 | blau (PA/BW)/575 |
| 43 | H | H | H | 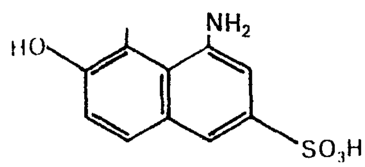 | blau (PA)<br>violett (BW)/580 |
| 44 | H | $OCH_3$ | $OCH_3$ | 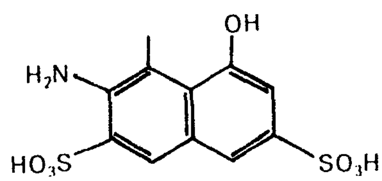 | stark grünst. blau (PA)/605 |
| 45 | H | $OCH_3$ | $OCH_3$ | 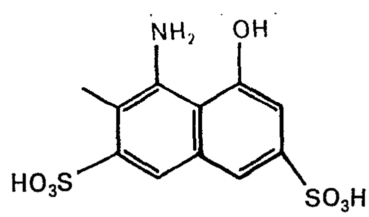 | blau (PA)<br>rotst. blau (BW)/585 |
| 46 | H | $OCH_3$ | $OCH_3$ | 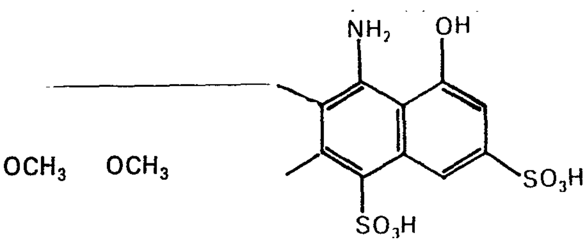 | grünst. blau (PA)<br>blau (BW)/622 |

Tabelle 4

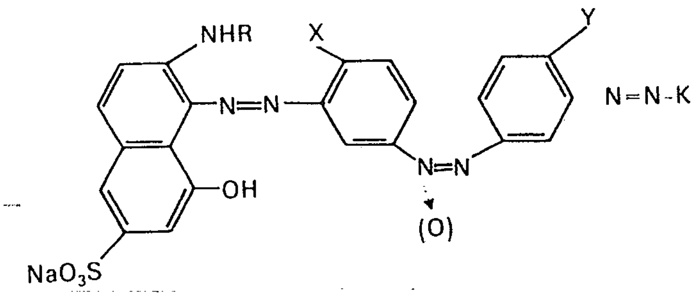

| Nr. | R | X | Y | K | Farbton/$\lambda_{max}$[nm] |
|---|---|---|---|---|---|
| 47 | H | H | H | 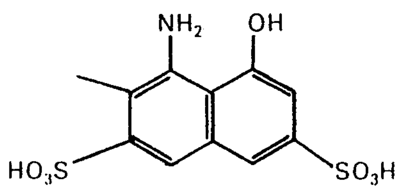 | rotstichiges violett (PA) bordo (BW)/527 |
| 48 | H | H | H | 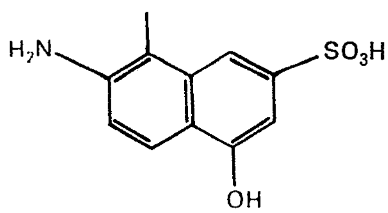 | rotbraun (PA)/502 |
| 49 | H | H | H | 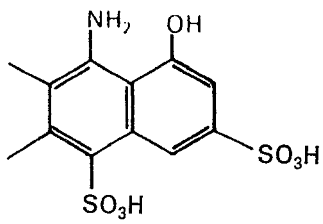 | violett (PA/BW)/525 |
| 50 | H | H | H | 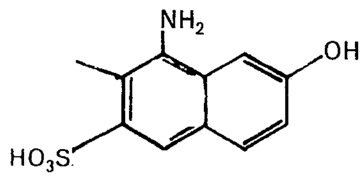 | rotbraun (PA)/502 |
| 51 | H | H | H | 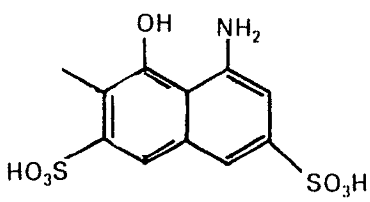 | blaustichiges rot (PA) rot (BW)/515 |
| 52 | H | H | H | 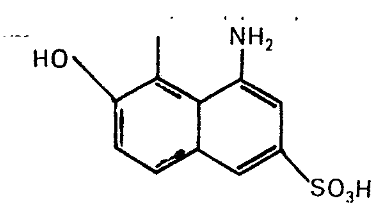 | rotbraun (PA)/504 |

Tabelle 5

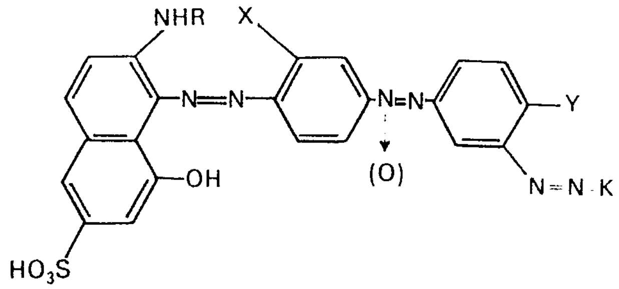

| Nr. | R | X | Y | K | Farbton/$\lambda_{max}$[nm] |
|---|---|---|---|---|---|
| 53 | H | H | H | 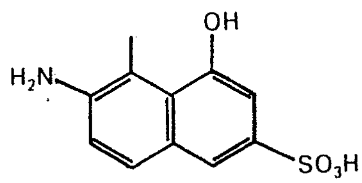 | rotst. violett (PA)/531 |
| 54 | H | H | H | 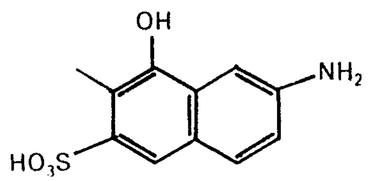 | marineblau (PA)/543 |
| 55 | H | $OCH_3$ | $OCH_3$ | 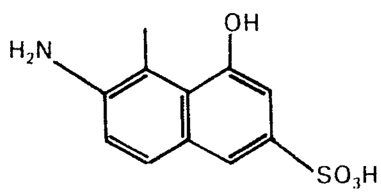 | marineblau (PA)/539 |
| 56 | H | $OCH_3$ | $OCH_3$ | 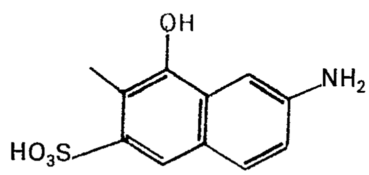 | blau (PA)/540 |

**Patentansprüche**

1. Trisazo/azoxyfarbstoffgemische, die in Form der freien Säure der Formel

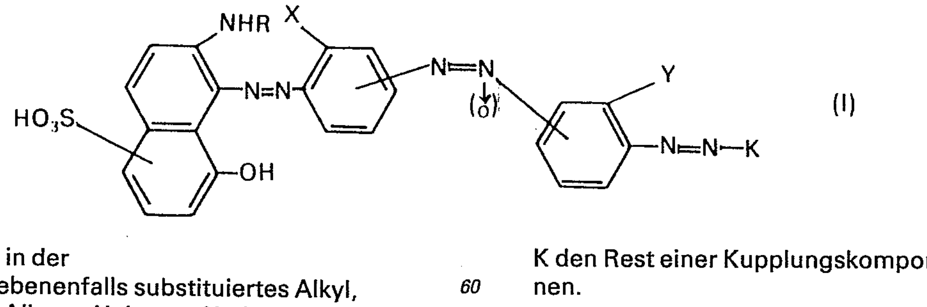

(I)

entsprechen, in der
R H oder gegebenenfalls substituiertes Alkyl,
X, Y H, Alkyl, Alkoxy, Halogen, Hydroxy, Alkylsulfonyl, gegebenenfalls mono- oder di-alkylsubstituiertes Sulfamoyl, Carboxy und Carboxyalkoxy und
K den Rest einer Kupplungskomponente bezeichnen.

2. Trisazo/azoxyfarbstoffgemische gemäss Anspruch 1, bei denen
K den Rest einer Kupplungskomponente aus der Hydroxybenzolsulfonsäure-, Hydroxybenzolcarbonsäure-, Pyrazol-, Indol- insbesondere aber Naphthalsulfonsäure-Reihe bezeichnet.

3. Trisazo/azoxyfarbstoffgemische gemäss Anspruch 1, die in Form der freien Säure der Formel

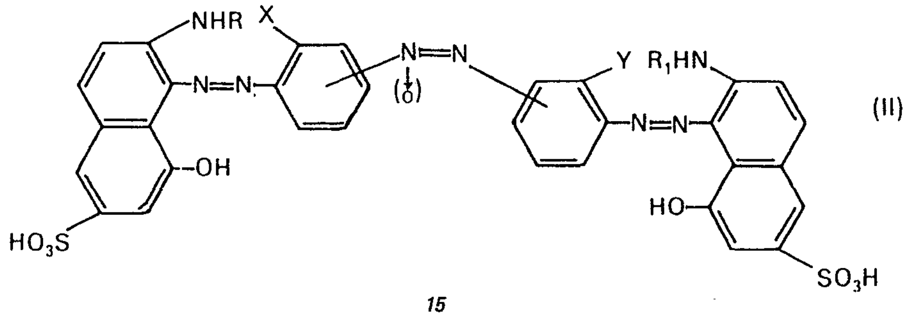

(II)

in der $R_1$ für H oder gegebenenfalls substituiertes Alkyl steht, entsprechen.

4. Trisazo/azoxyfarbstoffgemische gemäss Anspruch 1, die in Form der freien Säure der Formel

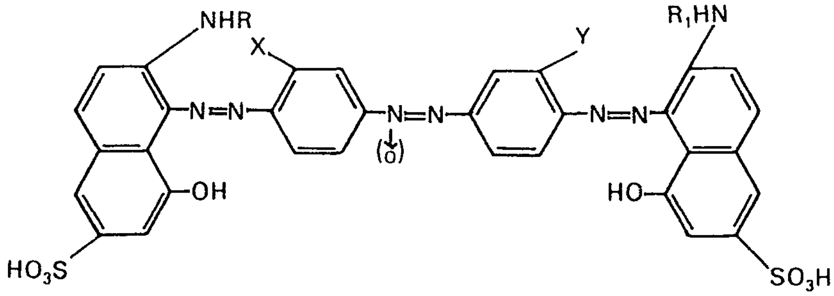

(III)

entsprechen, in der $R_1$ für H oder gegebenenfalls substituiertes Alkyl steht.

5. Trisazo/azoxyfarbstoffgemische gemäss Anspruch 1, die in Form der freien Säure der Formel

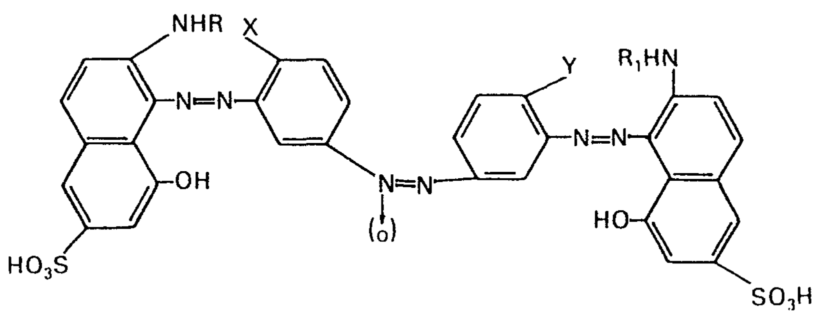

(IV)

entsprechen, in der $R_1$ für H oder gegebenenfalls substituiertes Alkyl steht.

6. Trisazo/azoxyfarbstoffgemische gemäss Anspruch 1, die in Form der freien Säure der Formel

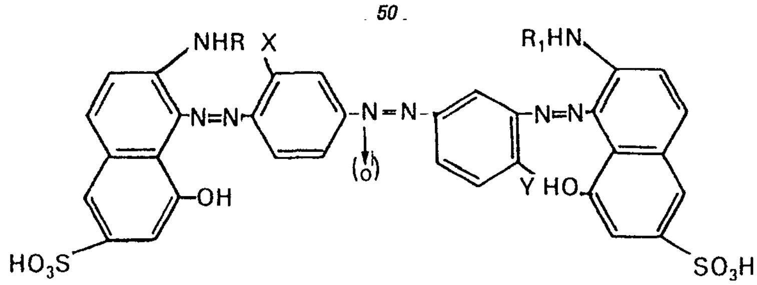

(V)

entsprechen, in der $R_1$ für Wasserstoff oder gegebenenfalls substituiertes Alkyl steht.

7. Trisazo/azoxyfarbstoffgemische gemäss Anspruch 1, die in Form der freien Säure der Formel

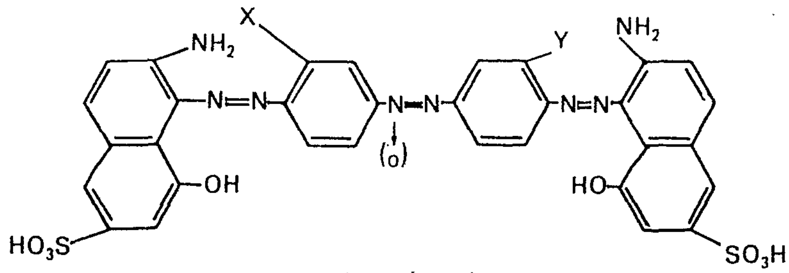
(VI)

entsprechen.

8. Trisazo/azoxyfarbstoffgemische gemäss den Ansprüchen 1-7, bei denen
R, $R_1$ für H oder $C_1$-$C_4$-Alkyl, das durch -OH, -COOH und -$SO_3H$ substituiert sein kann und
X, Y für H, $C_1$-$C_4$-Alkyl, $C_1$-$C_4$-Alkoxy, Chlor, Brom, Hydroxy, $C_1$-$C_4$-Alkylsulfonyl, gegebenenfalls mono- oder di-$C_1$-$C_4$-alkylsubstituiertes Sulfamoyl, COOH oder -O[$C_1$-$C_4$-Alkyl]COOH stehen.

9. Verfahren zur Herstellung von Trisazo/azoxyfarbstoffgemischen gemäss den Ansprüchen 1 bis 8, dadurch gekennzeichnet, dass man nitrogruppenhaltige Monoazoverbindungen bzw. -mischungen der Formel (VII) oder der Formel (VIII) sowie Mischungen der Monoazoverbindungen der Formeln (VII) und (VIII) oder (VII) bzw. (VIII) und (IX)

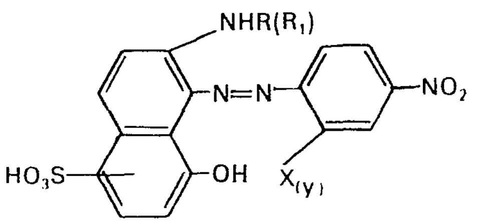
(VII)

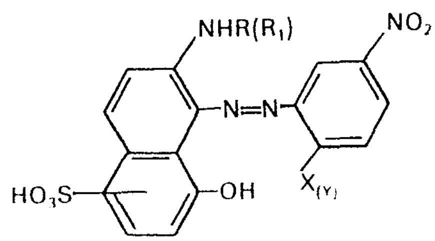
(VIII)

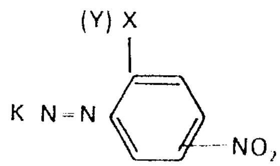
(IX)

in wässrigem alkalischen Medium bei Temperaturen zwischen 30-90°C reduziert und gleichzeitig in an sich bekannter Weise zu Trisazo- bzw. -azoxyverbindungen kondensiert und gegebenenfalls in an sich bekannter Weise nachoxidiert.

10. Verwendung der Farbstoffgemische gemäss den Ansprüchen 1-8 zum Färben von hydroxyl- und amid-gruppenhaltigen Fasermaterialien sowie zum Färben von Papier und Leder.

**Revendications**

1. Mélanges de colorants trisazo/azoxy qui, sous la forme de l'acide libre, répondent à la formule:

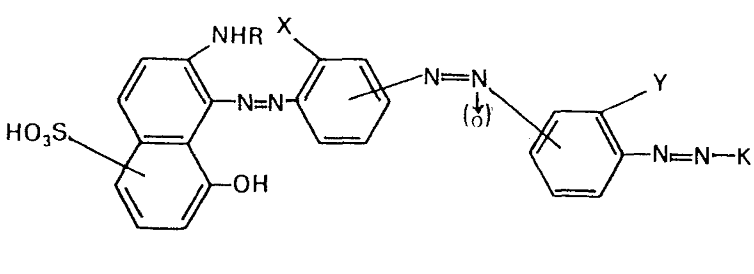
(I)

dans laquelle
R représente H ou un groupe alkyle éventuellement substitué,
X et Y représentent H, un groupe alkyle, alkoxy, un halogène, un groupe hydroxy, alkylsulfonyle, sulfamoyle éventuellement mono- ou di-alkylé, carboxy et carboxyalkoxy et
K est le reste d'un copulant.

2. Mélanges de colorants trisazo/azoxy suivant la revendication 1, dans lesquels
K désigne le reste d'un copulant de la série de l'acide hydroxybenzènesulfonique, de l'acide hydroxybenzènecarboxylique, du pyrazole, de l'indole et surtout de l'acide naphtolsulfonique.

3. Mélanges de colorants trisazo/azoxy suivant la revendication 1 qui, sous la forme de l'acide

libre, répondent à la formule

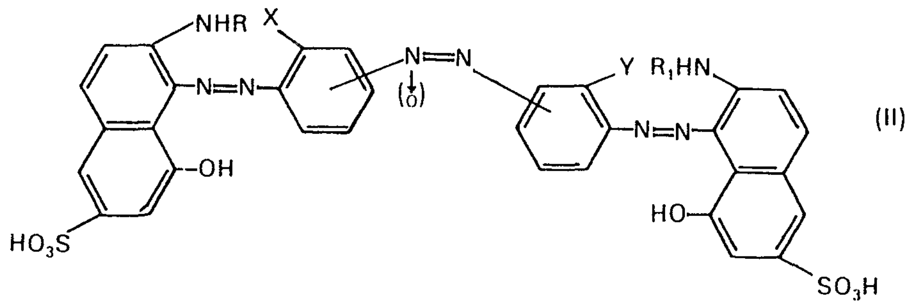

(II)

dans laquelle
$R_1$ représente H ou un groupe alkyle éventuellement substitué.

4. Mélanges de colorants trisazo/azoxy suivant la revendication 1, qui, sous la forme de l'acide libre, répondent à la formule

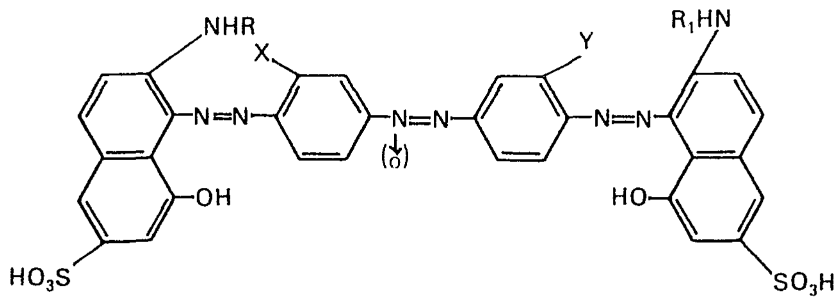

(III)

dans laquelle
$R_1$ représente H ou un groupe alkylé éventuellement substitué.

5. Mélanges de colorants trisazo/azoxy suivant la revendication 1, qui, sous la forme de l'acide libre, répondent à la formule

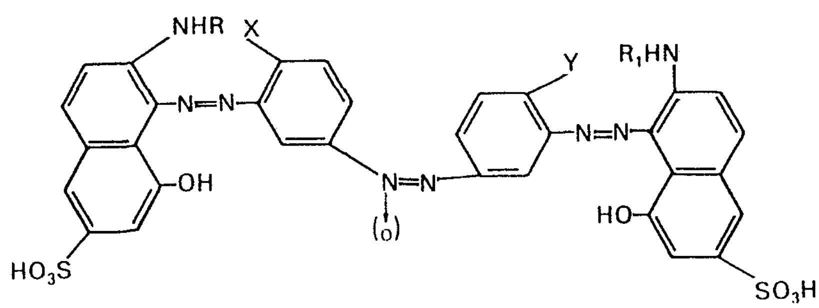

(IV)

dans laquelle
$R_1$ représente H ou un groupe alkyle éventuellement substitué.

6. Mélanges de colorants trisazo/azoxy suivant la revendication 1, qui, sous la forme de l'acide libre, répondent à la formule

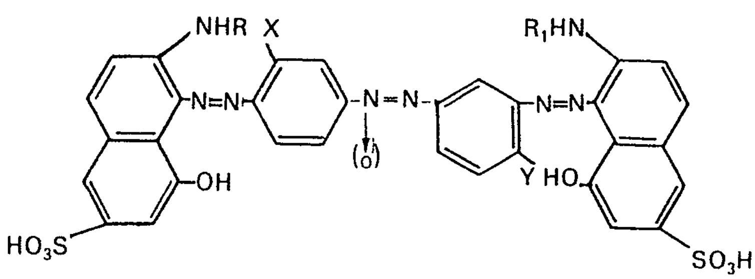

(V)

dans laquelle
$R_1$ représente l'hydrogène ou un groupe alkyle éventuellement substitué.

7. Mélanges de colorants trisazo/azoxy suivant la revendication 1, qui, sous la forme d'acide libre, répondent à la formule

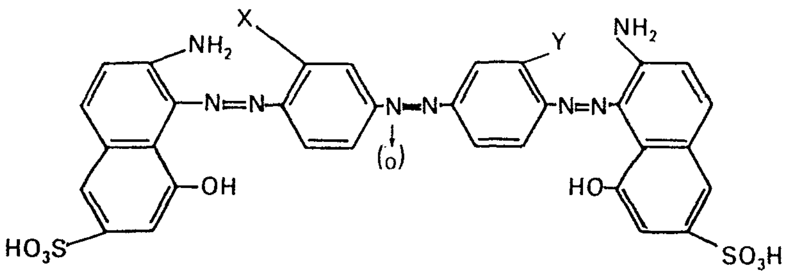

(VI)

8. Mélanges de colorants trisazo/azoxy suivant les revendications 1-7, dans lesquels R, $R_1$ représentent H ou un groupe alkyle en $C_1$ à $C_4$ qui peut être substitué par -OH, -COOH et $-SO_3H$ et X, Y représentent H, un groupe alkyle en $C_1$ à $C_4$, alkoxy en $C_1$ à $C_4$, le chlore, le brome, un groupe hydroxy, alkylsulfonyle en $C_1$ à $C_4$, sulfamoyle éventuellement substitué par un ou deux groupes alkyle en $C_1$ à $C_4$, COOH ou -O[alkyle en $C_1$ à $C_4$]COOH.

9. Procédé de production de colorants trisazo/azoxy suivant les revendications 1 à 8, caractérisé en ce qu'on réduit des composés ou mélanges de composés mono-azoïques porteurs de groupes nitro de formule (VII) ou de formule (VIII) ainsi que des mélanges de composés mono-azoïques de formules (VII) et (VIII) ou de formules (VII) ou (VIII) et (IX)

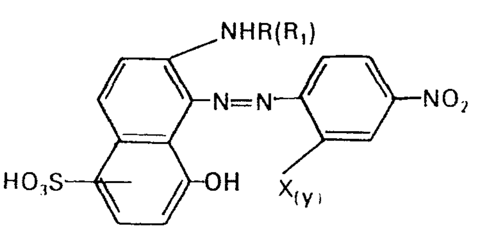

(VII)

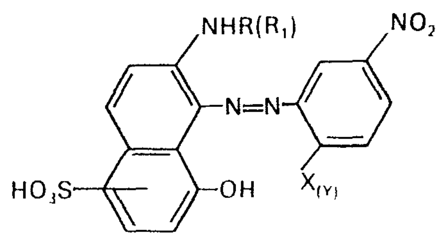

(VIII)

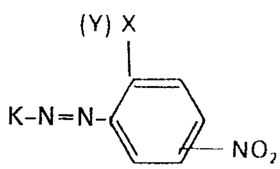

(IX)

en milieu aqueux alcalin à des températures comprises entre 30 et 90°C et on les condense en même temps d'une manière connue en composés trisazo et azoxy et, le cas échéant, on les expose à une post-oxydation d'une manière connue.

10. Utilisation des mélanges de colorants suivant les revendications 1 à 8 pour la teinture de matières fibreuses contenant des groupes hydroxyle et amide, ainsi que pour la teinture du papier et du cuir.

**Claims**

1. Trisazo/azoxy dyestuff mixtures which in the form of the free acid corespond to the formula

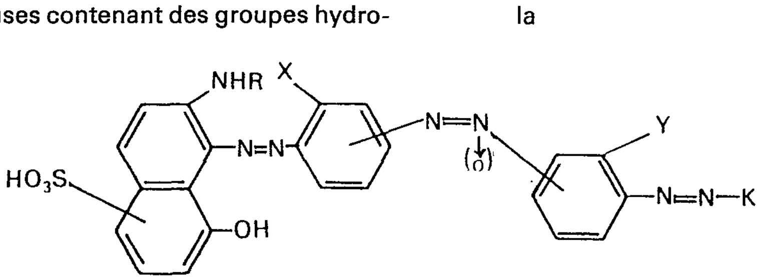

(I)

in which

R denotes H or optionally substituted alkyl,

X and Y denote H, alkyl, alkoxy, halogen, hydroxyl, alylsulphonyl, optionally mono- or di-alkyl-substituted sulphamoyl, carboxyl and carboxyalkoxy and

K denotes the radical of a coupling component.

2. Trisazo/azoxy dyestuff mixtures according to claim 1, in which

K denotes the radical of a coupling component from the hydroxybenzenesulphonic acid, hydroxybenzenecarboxylic acid, pyrazole or indole series, but especially from the naphtholsulphonic acid series.

3. Trisazo/azoxy dyestuff mixtures according to Claim 1, which in the form of the free acid correspond to the formula

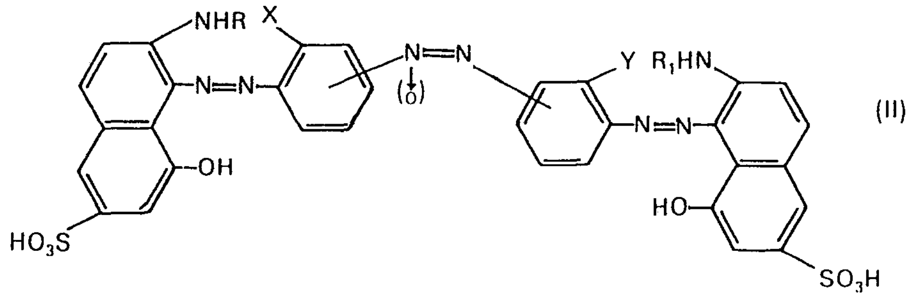

(II)

in which

$R_1$ represents H or optionally substituted alkyl.

4. Trisazo/azoxy dyestuff mixtures according to Claim 1, which in the form of the free acid correspond to the formula

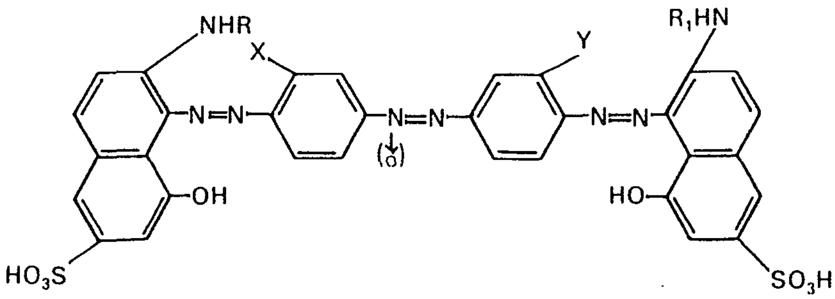

(III)

in which

$R_1$ represents H or optionally substituted alkyl.

5. Trisazo/azoxy dyestuff mixtures according to Claim 1, which in the form of the free acid correspond to the formula

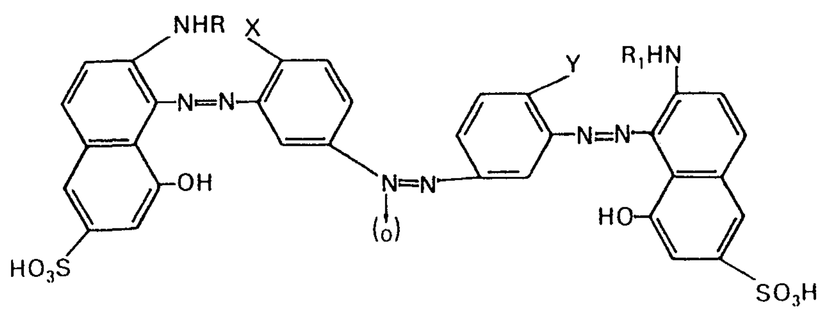

(IV)

in which

$R_1$ represents H or optionally substituted alkyl.

6. Trisazo/azoxy dyestuff mixtures according to Claim 1, which in the form of the free acid correspond to the formula

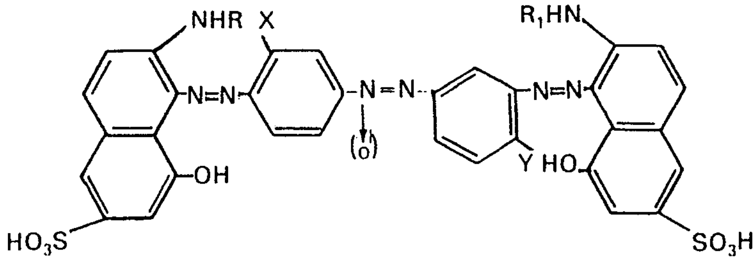

(V)

in which

$R_1$ represents hydrogen or optionally substituted alkyl.

7. Trisazo/azoxy dyestuff mixtures according to Claim 1, which in the form of the free acid correspond to the formula

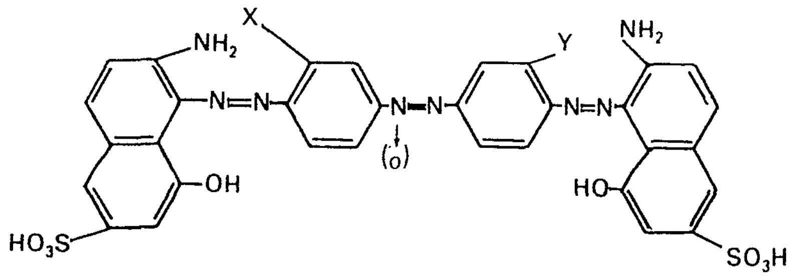

(VI)

8. Trisazo/azoxy dyestuff mixtures according to Claims 1-7, in which
R and $R_1$ represent H or $C_1$-$C_4$alkyl, which can be substituted by -OH, -COOH and $-SO_3H$, and
X and Y represent H, $C_1$-$C_4$-alkyl, $C_1$-$C_4$-alkoxy, chlorine bromine, hydroxyl, $C_1$-$C_4$-alkylsulphonyl, optionally mono- or di-$C_1$-$C_4$-alkyl-substituted sulphamoyl, COOH or $-O[C_1\text{-}C_4\text{-alkyl}]COOH$.

9. Process for the preparation of trisazo/azoxy dyestuff mixtures according to Claims 1 to 8, characterised in that monoazo compounds containing nitro groups, or mixtures of monoazo compounds containing nitro groups, of the formula (VII) or of the formula (VIII), or mixtures of the monoazo compounds of the formula (VII) and (VIII), or (VII) and (IX) or (VIII) and (IX)

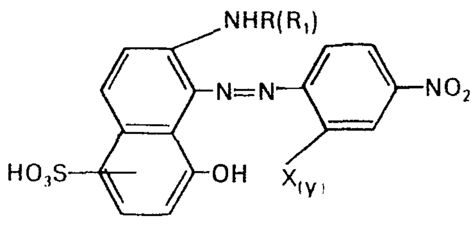

(VII)

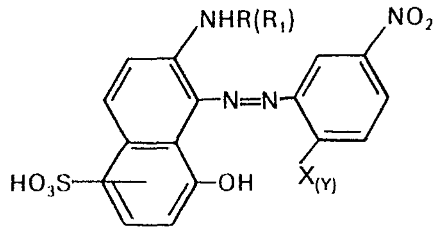

(VIII)

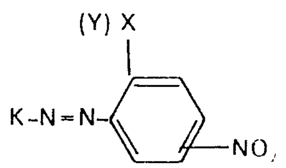

(IX)

are reduced in an aqueous alkaline medium at temperatures between 30 and 90°C and at the same time condensed, in a manner known per se, to trisazo or -azoxy compounds, and are optionally subsequently oxidised in a manner known per se.

10. Use of the dyestuff mixtures according to Claims 1-8 for dyeing fibre materials containing hydroxyl groups and fibre materials containing amide groups, as well as for dyeing paper and leather.